# EUROPÄISCHE PATENTANMELDUNG

(11) **EP 4 310 125 A1**
(43) Veröffentlichungstag der Anmeldung: **24.01.2024**
(21) Anmeldenummer: 22186012.5
(22) Anmeldetag: 20.07.2022
(51) Int. Cl.: C08G 59/50, C08G 59/62, C08G 59/68, C04B 40/00

(54) **TERTIÄRE AMINE ZUR VERBESSERUNG DES KRIECHVERHALTENS VON CHEMISCHEN DÜBELN**

(71) Anmelder: Hilti Aktiengesellschaft, 9494 Schaan (LI)
(72) Erfinder: Martin-Lasanta, Ana-Maria, 35398 Gießen (DE); Behrens, Nicole, 81245 München (DE)
(74) Vertreter: Hilti Aktiengesellschaft Corporate Intellectual Property

(57) **Zusammenfassung**

Die Erfindung betrifft die Verwendung von tertiären Aminen in einer Epoxidharzmasse zur Verbesserung des Kriechverhaltens eines aus der Epoxidharzmasse hergestellten chemischen Dübels.

## Beschreibung

Die Erfindung betrifft die Verwendung von tertiären Aminen in einer Epoxidharzmasse zur Verbesserung des Kriechverhaltens eines aus der Epoxidharzmasse hergestellten chemischen Dübels.

Mehrkomponenten-Zusammensetzungen auf der Grundlage von härtbaren Epoxidharzen und Aminen sind seit langem bekannt und werden als chemische Dübel zur Befestigung von Konstruktionselementen wie Ankerstangen, Bewehrungseisen und Schrauben in Bohrlöchern verschiedenen Untergründen, wie bespielweise Beton, verwendet.

Während der Lebensdauer eines chemischen Dübels, insbesondere unter Dauerbelastung und bei erhöhten Temperaturen, neigen chemische Dübel zum Kriechen. Kriechen beschreibt dabei die plastische Verformung oder Bewegung eines chemischen Dübels infolge anhaltender Lasteinwirkung. Kriechen beeinträchtigt die Leistungsfähigkeit eines chemischen Dübels erheblich, wie beispielsweise auch beschrieben in R. Nilforoush; M. Nilsson; G. Söderlind; L. Elfgren; "Long-Term Performance of Adhesive Bonded Anchors", Structural Journal, 2016, 113 (2), 251-261. Die Kriechcharakterisierung und die damit einhergehende Angabe zum Kriechverhalten eines chemischen Dübels spielen eine wichtige Rolle für die Dauerhaftigkeit und Zuverlässigkeit einer Verankerungsstelle unter Verwendung eines chemischen Dübels im Bauwesen. Die Angaben zum Kriechverhalten, werden daher für die Auslegung einer Verankerungsstelle im Bauwesen herangezogen.

Die EP 1 716 195 B1 beschreibt die Verwendung von tertiären Aminen in chemischen Verankerungssystemen. Es wird ein Zusammenhang zwischen der Verwendung von tertiären Aminen in der Härterkomponente einer Mehrkomponenten-Zusammensetzung und der Erhöhung der maximal erreichbaren Glasübergangstemperatur der aus der Mehrkomponenten-Zusammensetzung hergestellten Masse postuliert. Allerdings härten Epoxid-Amin-Systeme bei Temperaturen unterhalb ihrer maximal möglichen Glasübergangstemperatur nicht vollständig aus. Dies trifft insbesondere auf Systeme zu, die in dünnen Schichten, wie z. B. dem Ringspalt zwischen Beton und Anker, der ca. 1 mm beträgt, aushärten und sich daher nicht exotherm erwärmen können. Untersuchungen dazu wurden unter anderem von Michel et al., Constr. Build. Mat., 2020, 231, 117206 und Kroutilova et al., J. Appl. Pol. Sci., 2006, 99, 3669 durchgeführt. Da bei Kriechversuchen, die in der Regel unterhalb der maximalen Glasübergangstemperatur des Systems durchgeführt werden, diese maximale Glastemperatur des Systems nicht vorliegt, kann aus der Angabe zur finalen Glasübergangstemperatur kein Einfluss auf das Kriechverhalten eines chemischen Dübels hergeleitet werden. Es ist daher kein Zusammenhang zwischen der Verwendung von tertiären Aminen und einem verbesserten Kriechverhalten von chemischen Dübeln bekannt.

In Anbetracht der obigen Ausführungen ist es wünschenswert, chemische Dübel, insbesondere chemische Dübel auf Epoxid-Amin-Basis, mit einem verbesserten Kriechverhalten bereitstellen zu können.

Die Aufgabe der Erfindung ist daher, eine einfache und kostengünstige Lösung bereitzustellen, mit der das Kriechverhalten von chemischen Dübeln, insbesondere von chemischen Dübeln auf Epoxid-Amin-Basis, verbessert werden kann. Dabei ist es insbesondere Aufgabe der vorliegenden Erfindung das Kriechverhalten von chemischen Dübeln auf Epoxid-Amin-Basis bei erhöhten Temperaturen, vorzugsweise zwischen 40 °C und der Glasübergangstemperatur des chemischen Dübels, zu verbessern.

Die der Erfindung zugrundeliegende Aufgabe wird durch die Verwendung mindestens eines tertiären Amins in einer Epoxidharzmasse in einem gewichtsprozentualen Anteil von ≥ 1,0 Gew.-% bezogen auf das Gesamtgewicht der Epoxidharzmasse gemäß Anspruch 1 gelöst. Bevorzugte Ausführungsformen der erfindungsgemäßen Verwendung sind in den Unteransprüchen angegeben, die wahlweise miteinander kombiniert werden können.

Im Sinne der Erfindung haben die hier und in der nachfolgenden Beschreibung verwendeten Begriffe die folgende Bedeutung:
*"Kriechverhalten"* beschreibt die plastische Verformung, Verschiebung oder Bewegung eines chemischen Dübels infolge anhaltender Lasteinwirkung (Dauerlast).

*"Amine"* sind Verbindungen, die durch Austausch von einem, zwei oder drei Wasserstoffatomen durch Kohlenwasserstoffgruppen aus Ammoniak abgeleitet sind und die allgemeinen Strukturen RNH₂ (primäre Amine), R₂NH (sekundäre Amine) und R₃N (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)).

Es wurde nunmehr überraschend gefunden, dass die Verwendung mindestens eines tertiären Amins in einem gewichtsprozentualen Anteil von ≥ 1,0 Gew.-% bezogen auf das Gesamtgewicht der Epoxidharzmasse zu einer signifikanten Verbesserung des Kriechverhaltens eines aus der Epoxidharzmasse hergestellten chemischen Dübels führt.

Die Epoxidharzmasse ist bevorzugt eine Mehrkomponenten-Epoxidharzmasse, vorzugsweise eine Zweikomponenten-Epoxidharzmasse, die eine Epoxidharzkomponente (A) und eine Härterkomponente (B) umfasst. Die Epoxidharzkomponente (A) umfasst mindestens ein härtbares Epoxidharz. Die Härterkomponente (B) umfasst mindestens ein gegenüber Epoxidgruppen reaktives Amin. In der Mehrkomponenten-Epoxidharzmasse liegen die Epoxidharzkomponente (A) und die Härterkomponente (B) reaktionsinhibierend getrennt voneinander vor.

Zur Verbesserung des Kriechverhaltens eines chemischen Dübels ist es erfindungswesentlich, dass in der Epoxidharzmasse ≥ 1,0 Gew.-% mindestens tertiären Amins bezogen auf das Gesamtgewicht der Epoxidharzmasse verwendet werden.

Vorzugsweise wird das tertiäre Amin in der Härterkomponente (B) einer Mehrkomponenten-Epoxidharzmasse verwendet. Vorzugsweise umfasst die Härterkomponente (B) ≥ 5,0 Gew.-%, vorzugsweise 5,0 bis 20 Gew.-%, des tertiären Amins bezogen auf das Gesamtgewicht der Härterkomponente (B). In einer bevorzugten Ausführungsform der Erfindung umfasst die Härterkomponente (B) 5,0 Gew.-% bis 10,0 Gew.-% des tertiären Amins bezogen auf das Gesamtgewicht der Härterkomponente (B).

Die Epoxidharzmasse wird zur Herstellung von chemischen Dübeln verwendet, welche üblicherweise für Bauzwecke eingesetzt werden. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz.

Das für die erfindungsgemäße Verwendung eingesetzte tertiäre Amin umfasst vorzugsweise mindestens drei tertiäre Aminogruppen. Vorzugsweise umfasst das für die erfindungsgemäße Verwendung eingesetzte tertiäre Amin einen 6-gliedrigen Ring. In einer bevorzugten Ausführungsform umfasst das tertiäre Amin mindestens drei tertiäre Aminogruppen und einen 6-gliedrigen Ring, vorzugsweise einen 6-gliedrigen aromatischen Ring.

In einer bevorzugten Ausführungsform wird das tertiäre Amin ausgewählt aus der Gruppe der tertiären Aminophenole, vorzugsweise aus der Gruppe der 2,4,6-Tris(di-C₁-C₆-alkylamino) phenole.

Besonders bevorzugt ist das tertiäre Amin ausgewählt aus der Gruppe bestehend aus 2,4,6-Tris-(dimethylaminomethyl)phenol (kommerziell erhältlich unter dem Handelsnamen Ancamine^{®} K54) und 1,3,5-Tris[3-(dimethylamino)propyl]hexahydro-1,3,5-triazin (kommerziell erhältlich unter dem Handelsnamen Lupragen^{®} N600).

In einer besonders bevorzugten Ausführungsform wird für die erfindungsgemäße Verwendung zur Verbesserung des Kriechverhaltens eines chemischen Dübels 2,4,6-Tris-(dimethylaminomethyl)phenol verwendet.

Die Härterkomponente (B) umfasst mindestens ein gegenüber Epoxidgruppen reaktives Amin. Entsprechende Amine sind dem Fachmann bekannt. Vorzugsweise ist das mindestens eine gegenüber Epoxidgruppen reaktive Amin ausgewählt aus der Gruppe bestehend aus aliphatischen, alicyclischen, aromatischen und araliphatischen Aminen, und welches pro Molekül im Mittel mindestens zwei an ein Stickstoffatom gebundene reaktive Wasserstoffatome aufweist.

Beispiele für gegenüber Epoxidgruppen reaktive geeignete Amine sind im Folgenden angegeben, ohne jedoch den Umfang der Erfindung einzuschränken: 1,2-Diaminoethan(ethylendiamin), 1,2-Propandiamin, 1,3-Propandiamin, 1,4-Diaminobutan, 2,2-Dimethyl-1 ,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N,N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, MXDA), 1,4-Benzoldimethanamin (p-Xylylendiamin, PXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPDA)), Diaminodicyclohexylmethan (PACM), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin^{®} C260), 2,2-Bis(4-aminocyclohexyl)propan, (3(4),8(9)Bis(aminomethyldicyclo[5.2.1.0^{2,6}]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1 ,3-diamin, N-(3-Aminopropyl)cyclohexylamin, und 2-(2,2,6,6-tetramethylpiperidin-4-yl)propan-1,3-diamin.

Bevorzugte Amine sind Polyamine, wie 2-Methylpentandiamin (DYTEK^{®} A), 3-Aminomethyl-3,5,5-trimethylcyclohexan (IPDA), 1,3-Benzoldimethanamin (m-Xylylendiamin, MXDA), 1,4- Benzoldimethanamin (p-Xylylendiamin, PXDA), 1,6-Diamino-2,2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), (3(4),8(9)Bis(aminomethyl)dicyclo[5.2.1.0^{2,6}]decan (Isomerengemisch, tricyclischer primärer Amine; TCD-Diamin), 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3- diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis(amino- methyl)tricyclopentadien, 1,8-Diamino-p-menthan, Bis-(4-amino-3,5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin und Methylcyclohexyl-diamin (MCDA).

Die Amine können sowohl einzeln als auch im Gemisch von zwei oder mehreren der genannten Amine eingesetzt werden.

Das gegenüber Epoxidgruppen reaktive Amin ist in der Härterkomponente (B) bevorzugt in einem Anteil von 10 bis 90 Gew.-%, besonders bevorzugt 35 bis 60 Gew.-% bezogen auf das Gesamtgewicht der Härterkomponente (B) enthalten.

Vorzugsweise umfasst die Härterkomponente (B) ein Salz (S) als Beschleuniger ausgewählt aus der Gruppe bestehend aus Salzen der Salpetersäure, Salzen der Halogene, Salzen der Trifluormethansulfonsäure sowie Kombinationen davon. Als Salz (S) eignen sich insbesondere die folgenden Verbindungen: Ca(NO₃)₂ (Calciumnitrat, üblicherweise eingesetzt als Ca(NO₃)₂ Tetrahydrat), eine Mischung aus Ca(NO₃)₂/HNO₃, KNO₃ (Kaliumnitrat), NaNO₃(Natriumnitrat), Mg(NO₃)₂ (Magnesiumnitrat, üblicherweise eingesetzt als Mg(NO₃)₂ Hexahydrat), Al(NO₃)₃ (Aluminiumnitrat, üblicherweise eingesetzt als Al(NO₃)₃ Nonahydrat), NH₄NO₃ (Ammoniumnitrat), Ca(NO₂)₂(Calciumnitrit), NaCl (Natriumchlorid), NaBr (Natriumbromid), Nal (Natriumiodid), Ca(CF₃SO₃)₂ (Calciumtriflat), Mg(CF₃SO₃)₂ (Magnesiumtriflat), Li(CF₃SO₃)₂ (Lithiumtriflat). Die Salze können sowohl einzeln als auch im Gemisch von zwei oder mehreren der genannten Salze eingesetzt werden. Das Salz (S) ist vorzugsweise in einem Anteil von 0,1 bis 15 Gew.-%, vorzugsweise in einem Anteil 1,0 bis 10,0 Gew.-% bezogen auf das Gesamtgewicht der Härterkomponente (B) in der Härterkomponente (B) enthalten.

Zur Verbesserung der Löslichkeitseigenschaften des Salzes (S) in der Härterkomponente (B) kann es vorgesehen sein, dass das Salz (S) in einem geeigneten Lösemittel gelöst wird und entsprechend als Lösung eingesetzt wird. Hierfür eignen sich beispielsweise organische Lösemittel wie Methanol, Ethanol und Glycerin.

Die Härterkomponente (B) kann weitere Additive aus der Gruppe der Lösemittel, weitere phenolische Beschleuniger, Co-Beschleuniger, Haftvermittler und anorganischen Füllstoffe umfassen.

Nicht reaktive Verdünnungsmittel (Lösungsmittel) können vorzugsweise in einer Menge bis zu 30 Gew.-% enthalten sein, bezogen auf das Gesamtgewicht der Härterkomponente (B), beispielsweise von 1 bis 20 Gew.-%. Beispiele für geeignete Lösungsmittel sind Alkohole, wie Methanol, Ethanol oder Glycole, Niederalkylketone wie Aceton, Diniederalkylniederalkanoylamide wie Dimethylacetamid, Niederalkylbenzole wie Xylole oder Toluol, Phthalsäureester oder Paraffine. Vorzugsweise liegt die Menge an Lösungsmitteln bei <5 Gew.-% bezogen auf das Gesamtgewicht der Härterkomponente (B).

Phenolischen Beschleuniger sind vorzugsweise ausgewählt aus Salicylsäure, styrolysierten Phenolen und Cardanol, sowie Mischungen davon. Diese können in einem Anteil von 0 bis 10 Gew.-% in der Härterkomponente (B) vorliegen, bezogen auf das Gesamtgewicht der Härterkomponente.

Als Co-Beschleuniger können beispielsweise Benzylalkohol, Novolakharze, Imidazole, Organophosphine, Toluolsulfonsäuren, Lewis-Basen oder -Säuren wie Phosphorsäureester, oder Gemische von zwei oder mehr davon verwendet werden. Bevorzugt sind die Co-Beschleuniger in der Härterkomponente (B) in einem Gewichtsanteil von 0,001 bis 5 Gew.-% enthalten, bezogen auf das Gesamtgewicht der Härterkomponente (B).

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben.

Der Haftvermittler kann in einer Menge bis zu 10 Gew.-%, bevorzugt 0,1 bis 5 Gew.-%, weiter bevorzugt 1,0 bis 2,5 Gew.-% bezogen auf das Gesamtgewicht der Härterkomponente (B) enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Weitere Details zu verwendbaren Füllstoffen sind beispielsweise in der WO2020/058015 A1 ausgeführt. Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten der Mehrkomponenten-Zusammensetzung vorhanden sein.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Härterkomponente (B).

Die Epoxidharzkomponente (A) umfasst vorzugsweise wenigstens ein härtbares Epoxidharz. Als härtbares Epoxid in der Epoxidharzkomponente (A) kommt eine Vielzahl der hierfür dem Fachmann bekannten und kommerziell erhältlichen Verbindungen in Betracht, die im Mittel mehr als eine Epoxid-Gruppe, vorzugsweise zwei EpoxidGruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan. Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 180 bis 190 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von Mn < 2000 g/mol.

Der Anteil an Epoxidharz beträgt >0 bis 100 Gew.-%, bevorzugt 10 bis 70 Gew.-% und besonders bevorzugt 30 bis 60 Gew.-%, bezogen auf das Gesamtgewicht der Epoxidharzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether, Trimethylolpropantriglycidylether (TMPTGE) oder Trimethylolethantriglycidylether (TMETGE), wobei Trimethylolethantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethylolethantriglycidylether (TMETGE).

Die Reaktivverdünner liegen bevorzugt in einer Menge von 0 bis 60 Gew.-% vor, insbesondere von 1 bis 20 Gew.-%, bezogen auf das Gesamtgewicht der Epoxidharzkomponente (A).

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Des Weiteren kann die Epoxidharzkomponente (A) übliche Zusätze enthalten, insbesondere Haftvermittler und Füllstoffe, wie bereits für die Härterkomponente (B) beschrieben.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Epoxidharzkomponente (A).

Weitere denkbare Zusätze zur Mehrkomponenten-Epoxidharzmasse sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon. Die Mehrkomponenten-Epoxidharzmasse liegt vorzugsweise in Patronen, Kartuschen oder Folienbeuteln vor, die zwei oder mehrere voneinander getrennte Kammern umfassen, in welchen die Epoxidharzkomponente (A) und die Härterkomponente (B) der Mörtelmasse reaktionsinhibierend voneinander getrennt angeordnet sind.

Bei der bestimmungsgemäßen Anwendung werden die Epoxidharzkomponente (A) und die Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxidharzen der Epoxidharzkomponente (A) unter Polyaddition, sodass die Epoxidharzmasse unter Umgebungsbedingungen innerhalb einer gewünschten Zeit, vorzugsweise innerhalb weniger Minuten oder Stunden, aushärtet.

Die Epoxidharzkomponente (A) und die Härterkomponente (B) werden bevorzugt in einem Verhältnis gemischt, das entsprechend der EEW- und AHEW-Werte eine ausgeglichene Stöchiometrie ergibt.

Der AHEW-Wert (amine hydrogen equivalent weight, H-Äquivalent) gibt die Menge der Härterkomponente an, die 1 mol reaktives H enthält. Der EEW-Wert (epoxide equivalent weight, Epoxidäquivalentwerte) werden in der Regel von den Herstellern der jeweils verwendeten Epoxidharzkomponenten angegeben oder sie werden nach bekannten Methoden berechnet. Die EEW geben die Menge in g Epoxidharz an, die 1 Mol Epoxidgruppen enthält.

Experimentell wurde die AHEW durch Bestimmung der Glasübergangstemperatur (Tg) einer Mischung aus Epoxidharz (mit bekanntem EEW) und Aminkomponente erhalten.

Es wurden dabei die Glasübergangstemperaturen von Epoxidharz/Amin-Mischungen mit unterschiedlichen Verhältnissen bestimmt. Die Probe wurde mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("Tg₂") besitzt das optimale Verhältnis von Epoxidharz und Amin. Aus dem bekannten EEW und dem optimalen Epoxidharz/Amin-Verhältnis lässt sich der AHEW-Wert berechnen.

Kurzbeschreibung der Figuren
- Fig. 1: zeigt das Kriechverhalten der Beispiele 1 und 2 im Vergleich zum Kriechverhalten des Vergleichsbeispiels 1;
- Fig. 2: zeigt das Kriechverhalten der Beispiele 3 und 4 im Vergleich zum Kriechverhalten des Vergleichsbeispiels 2.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

**Tabelle 1: Liste der in den Beispielen und Referenzen verwendeten Bestandteile (Erklärung der Abkürzungen) sowie ihrer Handelsnamen und Bezugsquellen**

| **Funktion** | **Handelsname** | **Chemische Spezifikation** | **Hersteller** |
|---|---|---|---|
| Epoxidharz | Araldite^{®} GY 240 | Bisphenol-A basiertes Epoxidharz | Huntsman Advanced Materials, Deutschland |
| Epoxidharz | Araldite^{®} GY 282 | Bisphenol-F basiertes Epoxidharz | Huntsman Advanced Materials, Deutschland |
| Reaktivverdünner | Araldite^{®} DY-206 | 1,4-Butandiol-diglycidylether (BDDGE) | Huntsman Advanced Materials, Deutschland |
| Reaktivverdünner | Araldite^{®} DY-T-CH | Trimethyolpropantriglycidylether (TMPTGE) | Huntsman Advanced Materials, Deutschland |
| Haftvermittler | Glymo | (3-glycidyloxypropyl) trimethoxysilane | Evonik Resource Efficiency, Deutschland |
| Füllstoff | Millisil^{®} W1 2 | Quarzmehl, mittlere Partikelgröße d₅₀ = 16 µm | Quarzwerke, Deutschland |
| Zementfüllstoff | SupraCem 45 | Portlandzement | Schretter & Cie GmbH & Co. KG, Österreich |
| Verdicker | CabOSil^{®} TS 720 | Pyrogene Kieselsäure | Cabot corporation, Deutschland |
| Amin | mXDA | m-Xylylenediamine | MGC, Japan |
| Amin | Dytek^{®} A | 2-methylpentan-1,5-diamine | Invista, Niederlande |
| Amin | Vestamine^{®} IPD | Isophorondiamine (IPDA) | Evonik Degussa, Deutschland |
| Amin | 1,3-BAC | 1,3-Bis(aminomethyl)cyclohexan | Itochu, Deutschland |
| Amin | Baxxodur^{®} EC 210 | Diaminomethylcyclohexan (MCDA) | BASF, Deutschland |
| Beschleuniger | Phenolite^{®} TD 2131 | Phenol-Novolak-Harz | DIC Europe. Deutschland |
| Tertiäres Amin | Ancamine^{®} K54 | Tris-2,4,6-dimethylaminomethyl phenol | Air products, Niederlande |
| Beschleuniger | Calciumnitrat | Ca(NO₃)₂ 4H₂O | Sigma Aldrich, Deutschland |
| Lösungsmittel | Glycerin | 1,2,3-propanetriol | Merck, Deutschland |

Zur Herstellung der Epoxidharzkomponenten (A) gemäß Tabelle 2 wurden die flüssigen Komponenten mit Hilfe eines Holzspachtels per Hand vorgemischt. Anschließend wurden die Füllstoffe und Verdicker hinzugegeben und zunächst per Hand vorgemischt. Die Mischung wurde anschließend in einem Dissolver (PC Laborsystem, Volumen 1L) für 8,5 Minuten unter 80 mbar Unterdruck bei 3500 U/min gerührt.

Zur Herstellung der Härterkomponenten (B) gemäß Tabelle 2 wurden die Amine vorgemischt und der Beschleuniger bzw. das Beschleunigergemisch in der Aminmischung gelöst. Anschließend wurden Füllstoff und Verdicker zugegeben und per Hand vorgemischt. Die Mischung wurde anschließend in einem Dissolver (PC Laborsystem, Volumen 1L) für 8,5 Minuten unter 80 mbar Unterdruck bei 3500 U/min gerührt.

Der Beschleuniger Ca(NO₃)₂ wurde als Lösung in Glycerin (1,2,3-Propantriol) eingesetzt. Zur Herstellung der Calciumnitrat- Lösung wurden 400,0 g Calciumnitrat-Tetrahydrat zu 100,0 g Glycerin gegeben und bei 50 °C bis zur vollständigen Lösung (3 Stunden) gerührt. Die so hergestellte Lösung enthielt 80,0 % Calciumnitrat-Tetrahydrat.

Zur Herstellung der Mörtelmassen wurden die Epoxidharzkomponente (A) und die Härterkomponente (B) gemäß den Beispielen in Tabelle 2 in Hartkartuschen mit einem Mischungsverhältnis von 3:1 abgefüllt. Die Hartkartuschen wurden mit einem statischen Mischer (Quadro-Mischer) versehen und mittels eines Dispensers ausgepresst. Die ersten fünf Hübe der ausgepressten Mörtelmassen wurden verworfen, um die richtige Mischqualität vor der Injektion in das Bohrloch zu gewährleisten.

Zur Bestimmung des Kriechverhaltens wurden Dauerbelastungsversuche bei maximaler Temperaturleistung in Anlehnung an die Beschreibung in der Leitlinie ETAG 001 Teil 5 (Leitlinie für die europäische technische Zulassung für Metalldübel zur Verwendung in Beton), ersetzt durch EAD 330499-00-0601, durchgeführt. Hierzu wurden die durch Mischen der Epoxidharzkomponente (A) und der Härterkomponente (B) gemäß den (Tabelle 2) erhaltenen Mörtelmassen in 14 mm gereinigte (2x Druckluft 6 bar, 2x gebürstet und 2x Druckluft 6 bar) Bohrlöcher in stahlummantelte Betonzylinder (C20/25) mit 72 mm Einbindetiefe eingebaut. Nach einer Aushärtungszeit von 24 Stunden wurden die Versuche gestartet und für mindestens 40 Tage durchgeführt. Die Versuche wurden bei einer Temperatur von 43 °C durchgeführt.

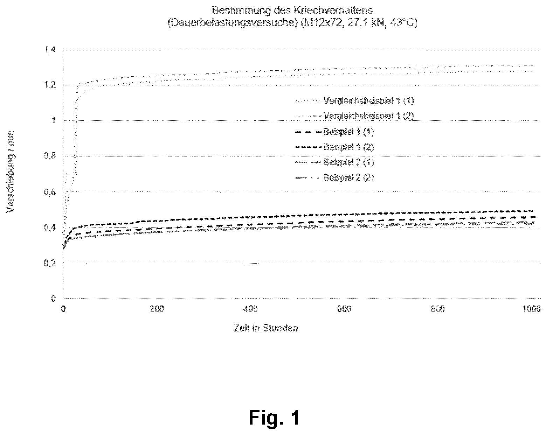

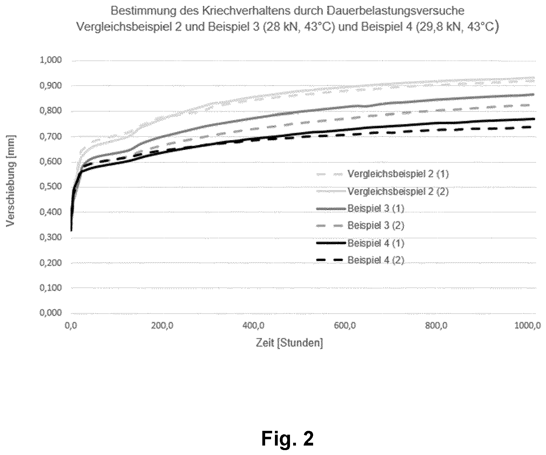

Bei den Dauerbelastungsversuchen der Beispiel 1 und 2 und Vergleichsbeispiel 1 wurde eine Dauerlast von 27,1 kN angelegt, Bei den Dauerbelastungsversuchen des Beispiels 3 und Vergleichsbeispiel 2 wurde eine Dauerlast von 28,0 kN verwendet, bei Beispiel 4 eine Dauerlast von 29,8 kN. Zu Beginn der Versuche wurden Messdaten mit einer hohen Frequenz aufgenommen (in der ersten Stunde 10 Messungen/min), anschließend 1 Messung pro Stunde. Die Ergebnisse sind in den Figuren 1 und 2 dargestellt.

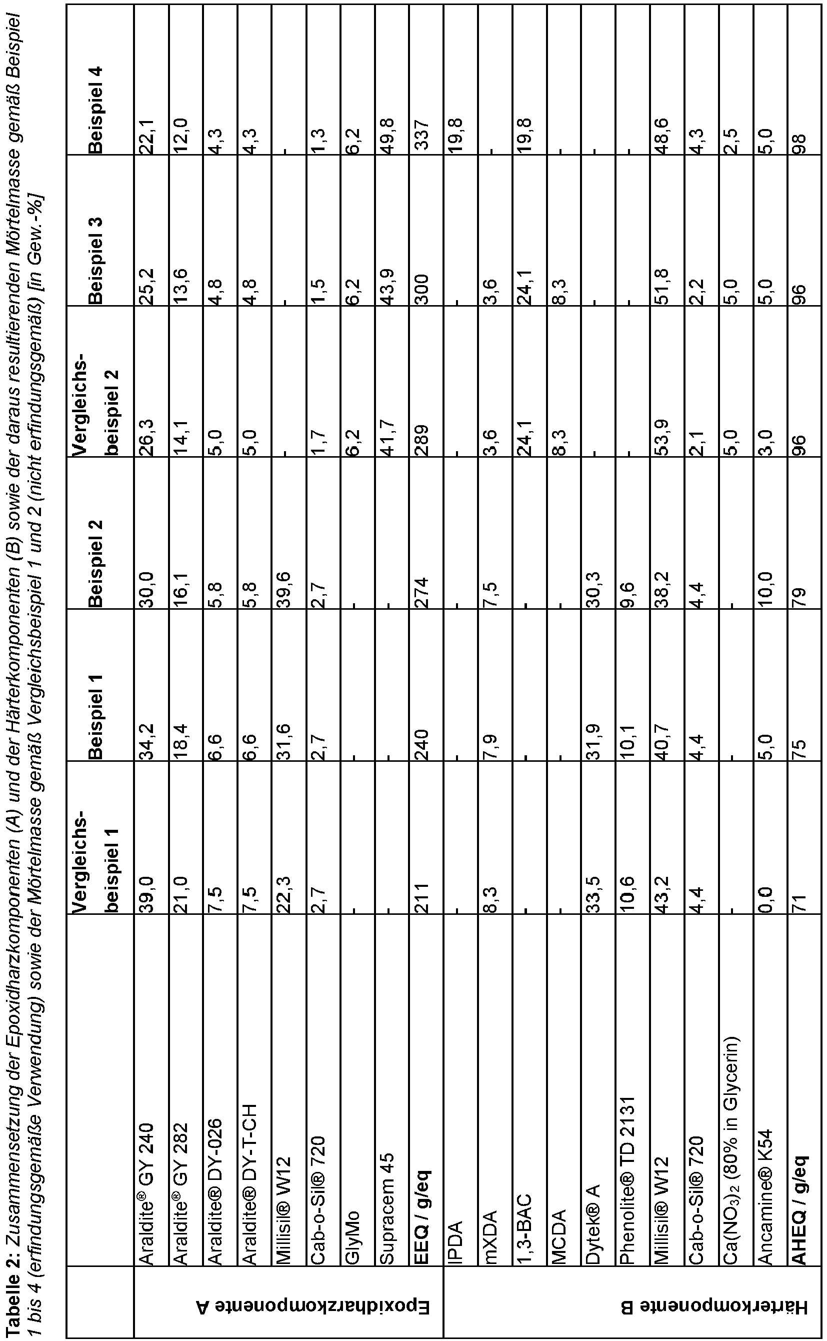

Die Beispiele 1 und 2 gemäß Tabelle 2 unterscheiden sich vom Vergleichsbeispiel 1 lediglich durch die Anwesenheit von Ancamine^{®} K54 in unterschiedlichen gewichtsprozentualen Anteilen. Figur 1 zeigt die Ergebnisse der Dauerbelastungsversuche zur Bestimmung des Kriechverhaltens der gehärteten Mörtelmassen gemäß Beispiel 1 und 2 im Vergleich zum Vergleichsbeispiel 1. Aus Fig. 1 ist ein verbessertes Kriechverhalten mit einer geringeren Anfangsverschiebung bei anhaltender Belastung und erhöhter Temperatur ersichtlich für Mörtelmassen, die Ancamine^{®} K54 enthalten.

Figur 3 zeigt die die Ergebnisse der Dauerbelastungsversuche zur Bestimmung des Kriechverhaltens der gehärteten Mörtelmassen gemäß Beispiel 3 und 4 sowie Vergleichsbeispiel 2. Die Härterkomponente (B) gemäß Vergleichsbeispiel 2 enthält Ancamine^{®} K54 in einem gewichtsprozentualen Anteil von lediglich 3 Gew.-% (nicht erfindungsgemäß). Aus Fig. 2 ist ein verbessertes Kriechverhalten mit einer geringeren Anfangsverschiebung bei anhaltender Belastung und erhöhter Temperatur ersichtlich für Mörtelmassen, die einen erhöhten gewichtsprozentualen Anteil an Ancamine^{®} K54 enthalten. Die gehärtete Mörtelmasse gemäß Beispiel 4 zeigt das beste Kriechverhalten mit der geringsten Anfangsverschiebung trotz einer erhöhten Dauerbelastung von 29,8 kN im Vergleich zu Beispiel 3 und Vergleichsbeispiel 2.

## Patentansprüche

1. Verwendung mindestens eines tertiären Amins in einer Epoxidharzmasse in einem gewichtsprozentualen Anteil von ≥ 1,0 Gew.-% bezogen auf das Gesamtgewicht der Epoxidharzmasse zur Verbesserung des Kriechverhaltens eines aus der Epoxidharzmasse hergestellten chemischen Dübels.

2. Verwendung gemäß Anspruch 1, **dadurch gekennzeichnet, dass** die Epoxidharzmasse eine Mehrkomponenten-Zusammensetzung ist, welche mindestens eine Epoxidharzkomponente (A) umfasst, die wenigstens ein härtbares Epoxidharz enthält, und mindestens eine Härterkomponente (B) umfasst, die mindestens ein gegenüber Epoxidgruppen reaktives Amin enthält, wobei die Epoxidharzkomponente (A) und die Härterkomponente (B) reaktionsinhibierend getrennt voneinander vorliegen,

3. Verwendung gemäß Anspruch 2, **dadurch gekennzeichnet, dass** die Härterkomponente (B) ≥ 5,0 Gew.-% des tertiären Amins bezogen auf das Gesamtgewicht der Härterkomponente (B) umfasst.

4. Verwendung gemäß Anspruch 3, **dadurch gekennzeichnet, dass** der gewichtsprozentuale Anteil des tertiären Amins 5,0 bis 20,0 Gew.-% bezogen auf das Gesamtgewicht der Härterkomponente (B) beträgt.

5. Verwendung gemäß einem der vorhergehenden Ansprüche, **dadurch gekennzeichnet, dass** das tertiäre Amin mindestens drei tertiäre Aminogruppen umfasst und/oder das tertiäre Amin einen 6-gliedrigen Ring aufweist.

6. Verwendung gemäß einem der vorhergehenden Ansprüche, **dadurch gekennzeichnet, dass** das tertiäre Amin ausgewählt ist aus der Gruppe bestehend aus der Gruppe der 2,4,6-Tris(di-C₁-C₆-alkylaminophenole) und 1,3,5-Tris[3-(dimethylamino)propyl]hexahydro-1,3,5-triazin.

7. Verwendung gemäß Anspruch 6, **dadurch gekennzeichnet, dass** das tertiäre Amin 2,4,6-Tris-(dimethylaminomethyl)phenol ist.

8. Verwendung gemäß einem der Ansprüche 2 bis 7, **dadurch gekennzeichnet, dass** die Härterkomponente (B) mindestens ein anorganisches Salz, vorzugsweise Ca(NO₃)₂ und/oder Ca(CF₃SO₃)₂, umfasst.

9. Verwendung gemäß einem der Ansprüche 2 bis 8, **dadurch gekennzeichnet, dass** die Mehrkomponenten-Zusammensetzung in Patronen, Kartuschen oder Folienbeuteln vorliegt, die zwei oder mehrere voneinander getrennte Kammern umfassen, in welchen die Epoxidharzkomponente (A) und die Härterkomponente (B) reaktionsinhibierend voneinander getrennt angeordnet sind.

10. Verwendung gemäß einem der vorhergehenden Ansprüche, **dadurch gekennzeichnet, dass** das härtbare Epoxidharz ein Diglycidylether von Bisphenol A oder von Bisphenol F oder ein Gemisch davon umfasst.
